# EUROPEAN PATENT APPLICATION

(11) **EP 2 511 924 A1**
(43) Date of publication of application: **17.10.2012**
(21) Application number: 11161954.0
(22) Date of filing: 11.04.2011
(51) Int. Cl.: H01G 9/20

(54) **Transition metal complexes as redox couples for electrochemical and optoelectronic devices**

(71) Applicant: Ecole Polytechnique Fédérale de Lausanne (EPFL), 1015 Lausanne (CH)
(72) Inventor: Graetzel, Michael, 1025 St-Sulpice (CH); Nazeeruddin, Khaja, 1024 Ecublens (CH); Yella, Aswani, 1025 St-Sulpice (CH); Kessler, Florian, 1004 Lausanne (CH); Tsao, Hoi Nok, 1025 St-Sulpice (CH); Zakeeruddin, Shaikm, 1030 Bussigny-Lausanne (CH); Baranoff, Etienne, 1020 Renens (CH)
(74) Representative: Ganguillet, Cyril

(57) **Abstract**

The present invention provides electrochemical and/or optoelectronic devices comprising a first and a second electrode and, between said first and second electrode, a charge transport layer, said a charge transport layer comprising tetracyanoborate ([B(CN)_{4]}⁻) and a cationic metal complex functioning as redox-couple.

## Description

### Technical Field

The present invention relates to complexes, which are useful in electrochemical and/or optoelectronic devices, such devices comprising the complexes, electrolytes or charge transporting materials comprising the complexes, various uses of the complexes and methods for preparing an electrochemical device.

### Prior Art and the Problem Underlying the Invention

The dye-sensitized solar cell (DSSC) is attracting wide spread attention as a promising new generation of photovoltaic technology. Mimicking the principle of natural photosynthesis, its ecological and economical fabrication processes make it an attractive and credible alternative to conventional photovoltaic systems (Gratzel, M. Accounts Chem Res 2009, 42, 1788-1798.).

One of the key components of the DSSC is the hole conductor (HC) transporting positive charge carriers from the sensitizer to the back contact of the device. Electrolytes containing the iodide/triiodide redox system are commonly used as HCs due to their high reliability and good power conversion efficiency (PCE) (Wang, Z.-S.; Sayama, K.; Sugihara, H. The Journal of Physical Chemistry B 2005, 109, 22449-22455). However, the I⁻/I₃⁻ redox couple suffers from too low a redox potential resulting in an excessive thermodynamic driving force for the dye regeneration reaction. This limits the open circuit potential of current DSSCs to 0.7 - 0.8 V. Iodide containing electrolytes also corrode a number of metals such as, for example, Ag and Cu, imposing restrictions on the use of such materials as current collectors in DSSC modules. Also inorganic sensitizers, such as quantum dots can be corroded in the presence of iodide-based electrolytes, limiting the stability of the device. Furthermore, triiodide (I₃⁻) absorbs light in competition with the sensitizing dye.

In this context the development of stable non-corrosive redox couples is warranted. A whole variety of alternative mediators have been investigated in the past including halogenides or pseudohalogenides organic radicals or thiols and inorganic or organic p-type conductors. So far, all these redox mediators exhibited inferior PCEs compared to the I⁻/I₃⁻ couple, especially under full sunlight. This holds also for cobalt polypyridine complexes, reported in WO 03/038508, whose PCE under standard AM 1.5 conditions remained below 5% despite of extensive investigations over the last decade (Nusbaumer, H. et al., M. J Phys Chem B 2001, 105, 10461-10464).

Remarkably, Feldt *et al.* recently increased the PCE to 6.7 % by employing a newly designed D-π-A sensitizer coded D35 in conjunction with cobalt (II/III) trisbipyridyl complex (Feldt, S. et al., J. Am. Chem. Soc. 2010, 132, 16714-16724). However, D35 harvest sunlight only below 620 nm limiting the short circuit photocurrent (J_{SC}) to 10-11 mA/cm²_{.}

In view of the above, the present invention addresses the problem of replacing the I⁻/I₃⁻ redox couple in photoelectrochemical conversion devices by a redox-couple exhibiting less corrosiveness to materials that might be of use in the preparation of DSSCs, such as metals and sealing materials, for example.

Furthermore, it is an objective to provide a redox-couple that does not exhibit a high overpotential for dye regeneration. It is an objective to provide a redox couple resulting in a relatively high or increased open current potential (V_{OC}) of the electrochemical device containing the redox couple. It is also an objective of the invention to provide a redox couple with a comparatively high oxidation potential, and/or an adjustable oxidation potential. In particular, it is an objective to provide a redox-couple the oxidation portential of which can be adjusted in dependence of other device parameters, for example to a particular dye, so that efficient charge transfer to the dye can take place, while still improving on V_{OC} of the cell. It is an objective of the invention to provide a less light absorbing redox couple than iodide/triiodide system.

It is also an objective of the invention to provide more stable devices and devices having improved or higher conversion efficiency (PCE), which may be obtained by increasing V_{OC} or in other ways.

It is a further objective of the invention to provide a redox couple the charge of which can be adjusted or varied. For example, in certain situations it is considered advantageous to provide a non-charged or negatively charged redox couple. This may apply to the reduced or to the oxidized state, or to both states.

It is also an objective to provide a less absorbing redox system.

The present invention addresses the problems depicted above, which are part of the invention.

The present invention addresses the problems depicted above.

### Summary of the Invention

Remarkably, the present inventors provide a regenerative, dye-sensitized solar cell with a high power conversion efficiency using a metal complex-based redox couple in the charge transport layer. Advantageously, the complex-based redox couple is added in the form of a salt oftetratcyanoborate (B(CN)₄).

In a first aspect, the present invention provides an electrochemical, preferably photoelectrochemical, and/or optoelectronic device comprising tetracyanoborate and a metal-complex based redox couple and/or redox-active metal complex, wherein said tetracyanoborate and said metal complex may be added in the form of a salt.

In an aspect, the present invention provides an electrochemical device comprising a first and a second electrode and, between said first and second electrode, a charge transport layer, said a charge transport layer comprising tetracyanoborate ([B(CN)₄]⁻) and a cationic metal complex of formula I:

M (La)ₙ (Xb)ₘ (I)

wherein:
M is a transition metal, preferably a 1^{st} row transition metal, for example Cobalt;
n is an integer from 1 to 6 and a is a consecutive number of a set of integers (1, ..., n), so that there are n ligands L1, ..., Ln;
any La (L1, L2, ... , Ln) is independently selected from mono-, bi-, and tridentate ligands,
comprising a substituted or unsubstituted ring or ring system, said ring or ring system comprising at least one nitrogen atom;
m is 0 or an integer from1 to 5 and, if m≥1, b is a consecutive number of a set of integers (1, ... , m), so that, if m≥1, there are m ligands X1, ... , Xm;
any Xb is independently a co-ligand; such as H₂O, Cl⁻, Br⁻, I⁻, CN⁻, NCO⁻, NCS⁻, NCSe⁻, NH₃, NR₁₀R₁₁R₁₂, PR₁₀R₁₁R₁₂, R₁₀, wherein R₁₀, R₁₁, and R₁₂ may be selected, for example, independently from substituted or unsubsituted alkyl, alkenyl, alkynyl and phenyl; and, wherein n and b equal the appropriate number of ligands present on metal M.

In another aspect, the present invention provides a method of preparing a electrochemical device, the method comprising the steps of:
- providing a first and a second electrode;
- providing a charge transport layer;
- adding to said charge transport layer a salt comprising tetracyanoborate ([B(CN)₄]⁻) and a cationic metal complex of formula I:

   M (La)ₙ (Xb)ₘ (I)

   wherein:
   M is a transition metal, preferably a 1^{st} row transition metal, for example Cobalt;
   n is an integer from 1 to 6 and a is a consecutive number of the set of integers (1, ..., n), so that there are n ligands L1, ..., Ln;
   any La (L1, L2, ... , Ln) is independently selected from mono-, bi-, and tridentate ligands,
   comprising a substituted or unsubstituted ring or ring system, said ring or ring system comprising at least one nitrogen atom;
   m is 0 or an integer from1 to 5 and, if m≥1, b is a consecutive number of a set of integers (1, ... , m), so that, if m≥1, there are m ligands X1, ... , Xm;
   any Xb is independently a co-ligand; such as H₂O, CN⁻, NCO⁻, NCS⁻, NCSe⁻, NH₃, NR₁₀R₁₁R₁₂, PR₁₀R₁₁R₁₂, R₁₀, wherein R₁₀, R₁₁, and R₁₂ may be selected, for example, independently from substituted or unsubsituted alkyl, alkenyl, alkynyl and phenyl; and, wherein n and m equal the appropriate number of ligands present on metal M.

In a third aspect, the present invention the use of a salt comprising tetracyanoborate and a metal-complex based redox couple in an electrochemical, a photoelectrochemical and/or an optoelectronic device.

Further aspects and preferred embodiments of the invention are defined herein below and in the appended claims. Further features and advantages of the invention will become apparent to the skilled person from the description of the preferred embodiments given below.

### Brief Description of the Drawings

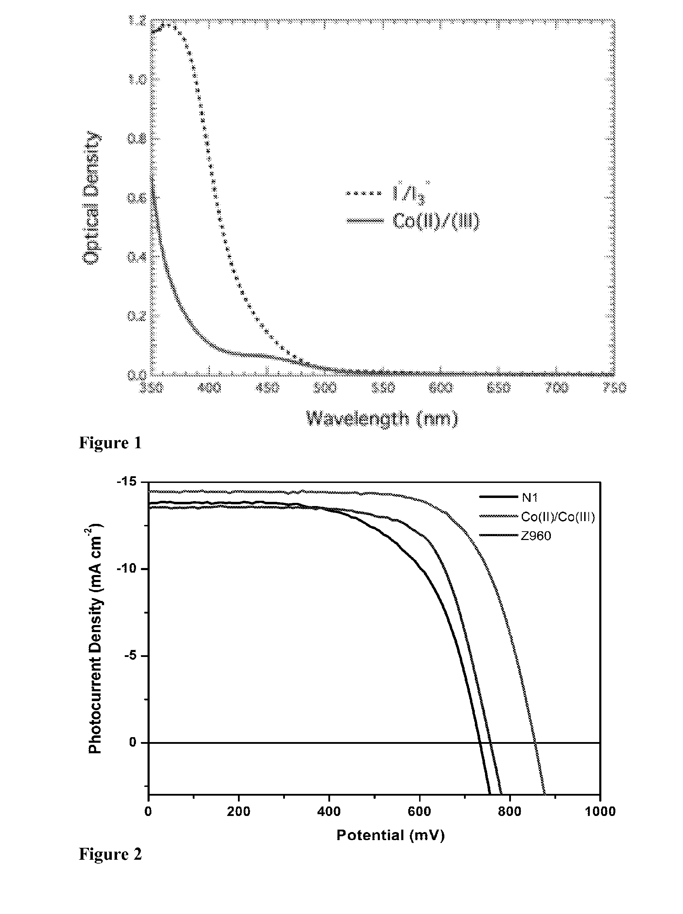

**Figure 1** compares absorption spectra of an electrolyte of a device according to an embodiment of the invention with the iodide-based electrolyte Z960, which is described in the examples (measurements were performed with the electrolytes diluted 200 times in acetonitrile).
**Figure 2** shows photocurrent-voltage response at simulated full AM 1.5 sunlight of DSSCs employing the electrolyte according to an embodiment of the invention (Co(II)/Co(III)) in comparison with devices using the iodide/triiodide redox couple (N1, Z960). The superior performance of the device of the invention can be seen, which is due to higher short circuit current (J_{SC}), but more importantly due to the higher open current voltage (V_{OC}).

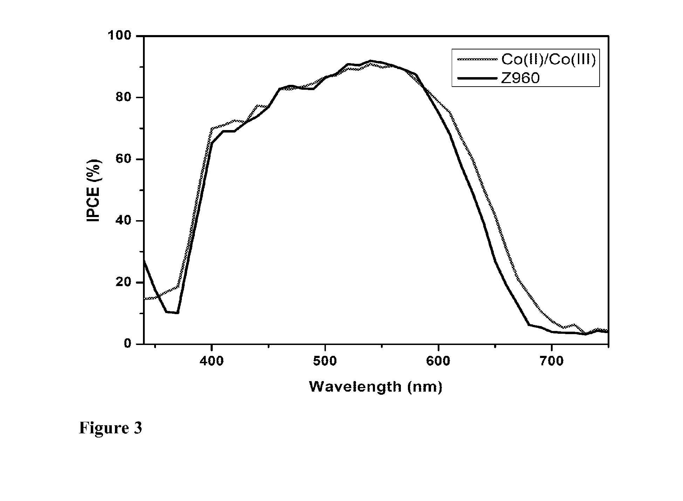

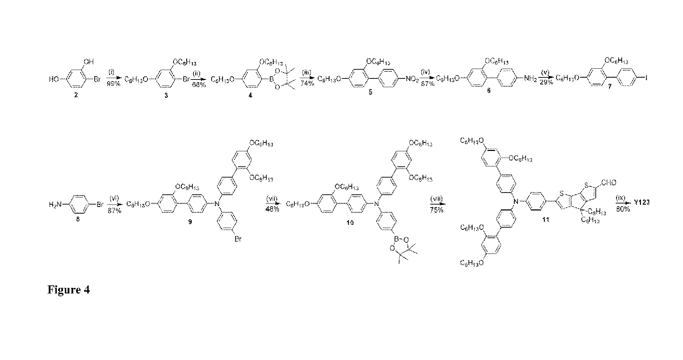

**Figure 3** shows the Incident-Photo-to-electron Conversion Efficiency (IPCE or quantum efficiency) of a device according to an embodiment of the invention (Co(II)/Co(III)), which is compared to a device using the same dye (see Figure 4) but a prior art electrolyte. It can be seen that for the device of the embodiment, the IPCE spectrum is enhanced in the blue region (450-500 nm) and more clearly at wavelengths of 600nm and larger.
**Figure 4** schematically shows the synthesis of the dye Y123 3-{6-{4-[bis(2',4'-dihexyloxybiphenyl-4-yl)amino-]phenyl}-4,4-dihexyl-cyclopenta-[2,1-b:3,4-b']dithiphene-2-yl}-2-cyanoacrylic acid. The reagents are: (i) 1-bromohexane, K₂CO₃, DMF; (ii) n-BuLi, THF, isopropyl pinacol borate; (iii) 4-bromo-nitrobenzene, Pd(PPh₃)₂Cl₂, Cs₂CO₃, DMF, H₂O; (iv) Zn, NH₄Cl, acetone, H₂O; (v) H₂SO₄, NaNO₂, KI, H₂O; (vi) 6, CuI, 1,10-phenantroline, t-BuOK, toluene; (vii) n-BuLi, THF, isopropyl pinacol borate; (viii) 1, Pd(PPh₃)₂Cl₂, Cs₂CO₃, DMF, H₂O; (ix) cyanoacetic acid, piperidine, CHCl₃.

### Detailed Description of the Preferred Embodiments

The present invention provides electrochemical and/or optoelectronic devices comprising a metal-based redox couple, in particular a redox-active compound comprising a metal atom. For the purpose of the present specification, the expression "redox-active compound" is the same as the "metal-based redox couple", and also encompasses the term "redox-active complex", "redox-compound" and the like.

The redox active compound preferably undergoes reduction and oxidation in the device of the invention, in particular when it is operating. For example, the redox active compound undergoes oxidation at a first electrode, for example a photoelectrode, and reduction at a second electrode, for example a counter electrode, or the inverse, depending on the use of the device.

The redox-active compound is preferably a metal complex comprising one or more ligands, such as, for example, ligands La and/or Xb as further detailed elsewhere in this specification. According to an embodiment, the redox-active compound is a complex of formula (I):

M (La)ₙ (Xb)ₘ (I)

The metal atom of the complex, for example M, is preferably selected from first row transition metals. The metal atom may thus be selected preferably from the metals Sc, Ti, V, Cr, Mn, Fe, Co, Ni, Cu, and Zn. Preferably, the metal, for example M, is selected from Fe, Co, Ni, Cu. Most preferably, the metal, is cobalt (Co). As the complex of the invention forms a redox couple, the metal atom M may be present at different oxidation levels in the complex of the invention. For example, the metal atom may be present in the +II and +III oxidative states. Accordingly, the reversible reduction and/or oxidation of the metal atom accounts for the redox-activity of the redox-active compound and/or the metal-based redox couple.

According to an embodiment, the complex comprises at least one mono-, bi-, and/or tridentate ligand comprising a substituted or unsubstituted ring or ring system, said ring or ring system comprising at least one nitrogen atom. Said ligand preferably corresponds to a ligand La in the metal-based complex of the invention.

According to an embodiment, the complex comprises at least one mono-, bi-, and/or tridentate ligand comprising a five- or six membered heteroring comprising at least one nitrogen atom, in particular a ring nitrogen atom. Said ligand preferably corresponds to a ligand La in the metal-based complex of the invention. According to an embodiment, said five- or six membered heteroring comprises one, two or more ring-heteroatoms, for example three or more ring heteroatoms, for example four ring heteroatoms. Ring heteroatoms, for the purpose of the present specification, are preferably selected independently from O, N, and S.

According to an embodiment, said five- or six membered heteroring comprises two or more ring nitrogen atoms, for example three or more ring nitrogen atoms, for example four ring nitrogen atoms.

In the complex of formula (I), n is an integer from 1 to 6 and a is a consecutive number of a set of integers (1, ..., n), so that there are n ligands: L1, ..., Ln. For example, if n is 1, there is only one a, which is 1 and there is only one ligand La (L1).

If n is 2, "a" is a consecutive number of the set of integers (1, 2), so that there are two ligands La: ligands L1 and L2.

If n is 3,"a" is a consecutive number of the set of integers (1, 2, 3), so that there are three ligands La: L1, L2 and L3. If n is 4, there are the ligands L1, L2, L3, L4; if n is 5 there are the ligands L1, L2, L3, L4, L5; if n is 6 there are the ligands L1, L2, L3, L4, L5, L6. If n≥2, all ligands La are independently selected, so that they may all be the same, some of which may be the same, or all may be of different structure.

In the complex of formula (I), m is 0 or an integer from1 to 5 and, if m≥1, b is a consecutive number of a set of integers (1, ..., m), so that, if m≥1, there are m ligands: X1, ..., Xm. For example, if m is 0, there is no ligand Xb. If m is 1, there is one ligand Xb (X1). If m is 2, there are two ligands Xb (X1, X2), which are independently selected. The same principle as set out above for n and the ligands La applies.

The ligands Xb may be absent. Preferably, the ligands Xb, in as far as present, is/are co-ligand(s) and/or spectator ligand(s). Preferably, any one ligand Xb is independently selected from monodentate ligands. Preferably, all ligands Xb, in as far as present, are monodentate ligands.

According to an embodiment, n is an integer of 1 to 3, preferably 2 or 3.

It is noted that n and m equal the appropriate number of ligands present on metal M. The parameters n and m, as well as their sum, thus depends on the metal atom and of the valency of the ligands La and Xb (if they are mono-, bi-, or tridentate ligands). For example, if the metal is cobalt, there are generally 6 complex bonds possible to the metal, so that for example, if there are two tridentate ligands La, n is 2 and m is 0. In the same case, if there are three bidentate ligands La, m is 3 and m is 0.

According to an embodiment, ligands, in particular any ligand La of the redox-active compound, is independently selected from substituted and unsubstituted pyridine or polypyridine (for example, bi- and tripyridine) ligand, substituted and unsubstituted pyrazole, substituted and unsubstituted pyrazine, substituted and unsubstituted triazole, substituted and unsubstituted tetrazole, substituted and unsubstituted pyridazine, substituted and unsubstituted imidazole; wherein substituents are independently selected from hydrocarbons comprising 1 to 40 carbons and 0 to 25 heteroatoms, halogen, (-F, -Cl, -Br, -I), -NO₂, and -OH.

Substituents of said pyridine, polypyridine, pyrazole, pyrazine, triazole, pyridazine, and imidazole, in as far as present, may be selected as any one of substituents of R¹, R², R³, R⁴, R⁵, R⁶, R⁷, R⁸, R⁹, R¹⁰, R¹¹, R₁, R₂, R₃, R₄, R₅, and R₆ as defined elsewhere in this specification, in eluding from preferred embodiments of these substituents R¹-R¹¹ and R₁-R₇.

According to an embodiment, any one of said ligands La is independently selected from any one of the compounds of formula (1) to (30) below: 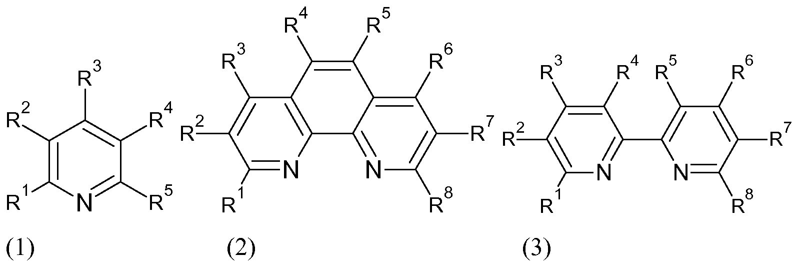 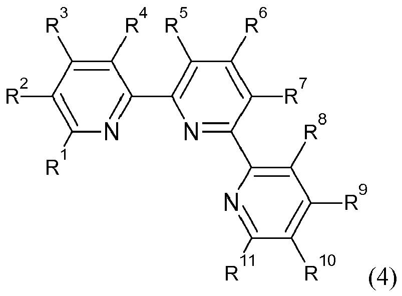 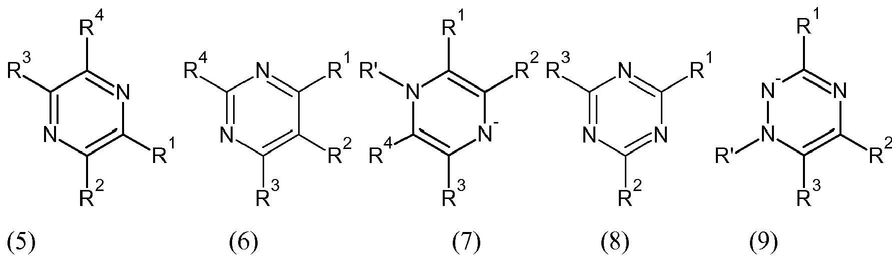 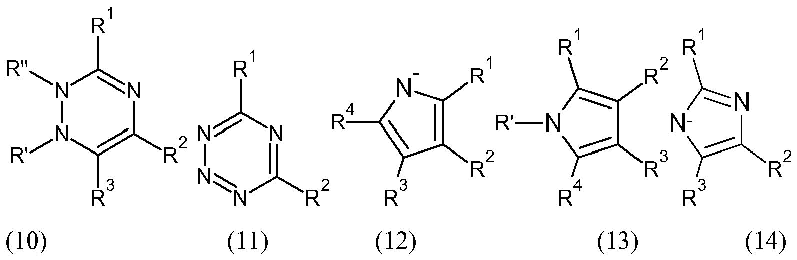 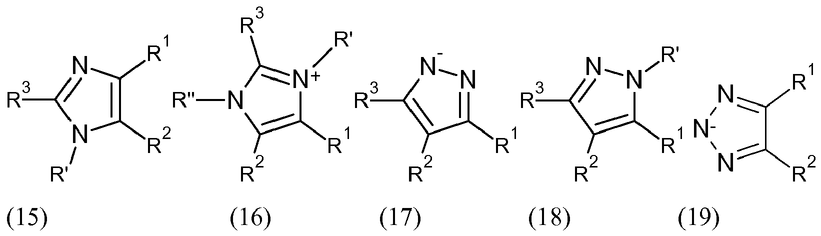 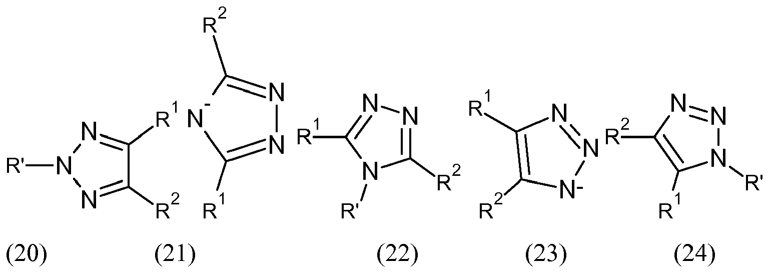 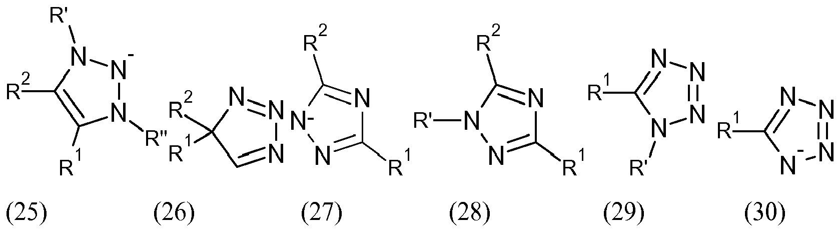 wherein any one of R¹, R², R³, R⁴, R⁵, R⁶, R⁷, R⁸, R⁹, R¹⁰, and R¹¹, in as far as present/applicable, is independently selected from H, from hydrocarbons comprising 1 to 30 carbons and 0 to 20 heteroatoms, halogen, (-F, -Cl, -Br, -I), -NO₂, -NH₂, and -OH; wherein R' and R", if applicable, are independently selected from H and substituents -CR_{A}R_{B}R_{C}, wherein R_{A}, R_{B}, and R_{C} are independently selected from H and from hydrocarbons comprising 1 to 30 carbons and 0 to 20 heteroatoms, halogen, (-F, -Cl, -Br, -I), and wherein R_{A} may also be selected from -NO₂, -NH₂ and -OH if R_{B} and R_{C} are not halogen, -NO₂, - NH₂ or -OH.

It is noted that if a redox-active complex of the present invention comprises two or more different ligands, such as, for example, two or more different ligands selected independently from compounds (1) to (30) above, any given substituent of substituents R¹, R², R³, R⁴, R⁵, R⁶, R⁷, R⁸, R⁹, R¹⁰, and R¹¹ (meaning any substituent with a given substituent numeral) does not need to be the same on said two (potentially different) ligands and can thus be independently selected. For example, in case the redox-active complex comprises two ligands according to formula (4), any R¹ on said one of these two ligands of formula (4) may be different from the substituent R¹ on the respective other substituent of formula (4). Similarly, in case the redox-active complex comprises two different ligands selected independently from the compounds of formulae (1)-(30), for example a ligand of formula (2) and a ligand of formula (3), any R¹ (and all other substituents having the same substituent number) present on these two ligands (4) are independently selected and may thus be the same or different. In other words, for any given ligand La, the respective substituents R¹-R¹¹ are selected independently from substituents R¹-R¹¹ present on another ligand La.

According to an embodiment, any one of R¹, R², R³, R⁴, R⁵, R⁶, R⁷, R⁸, R⁹, R¹⁰, and R¹¹ if applicable, is independently selected from halogen, -NO₂, -OH, -NH₂, hydrocarbons comprising 1-30 carbons and 0-20 heteroatoms, in particular as defined elsewhere in this specification, and from the substituents of formula (A-1) to (G-2) below: 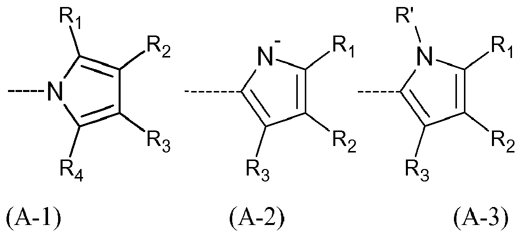 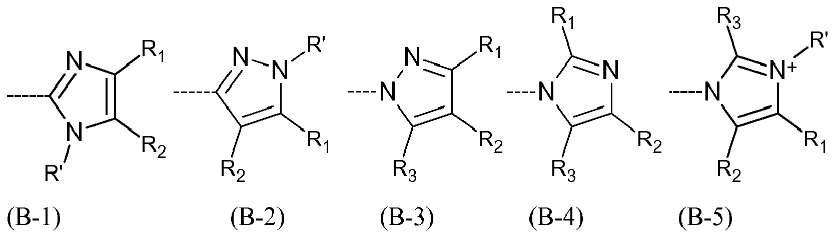 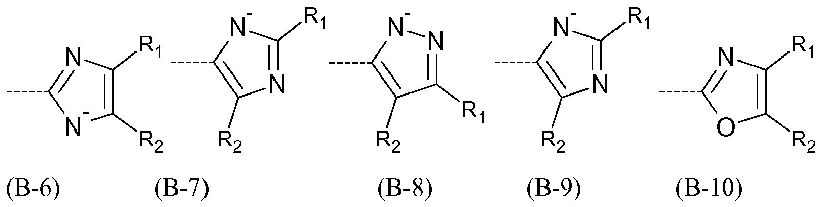 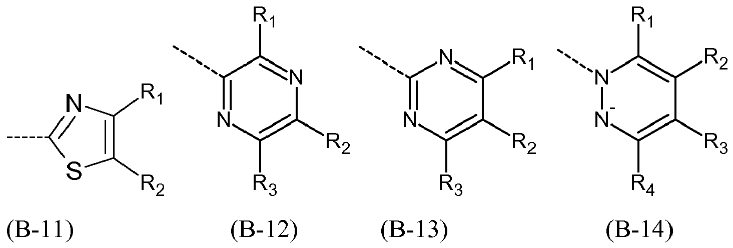 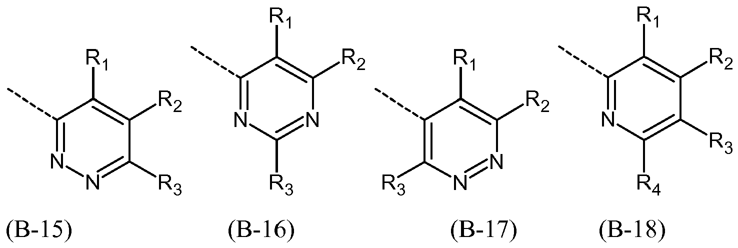 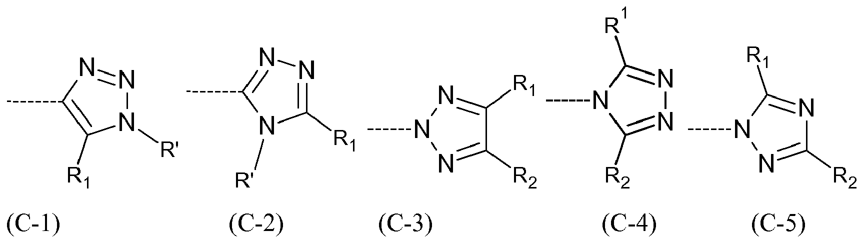 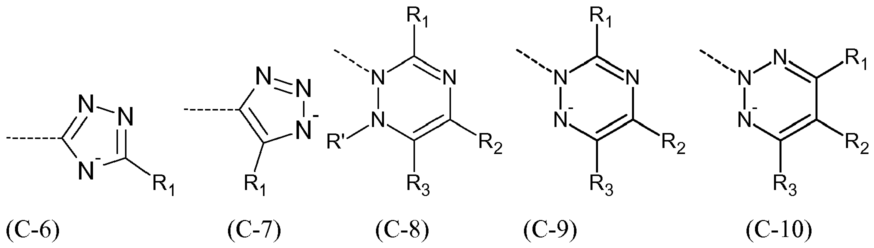 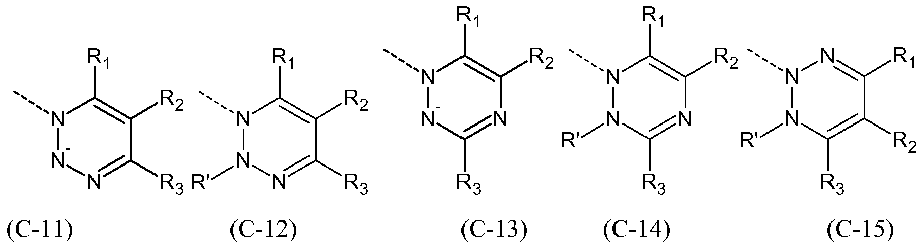 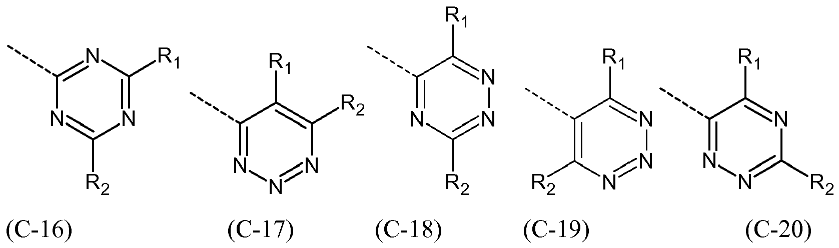 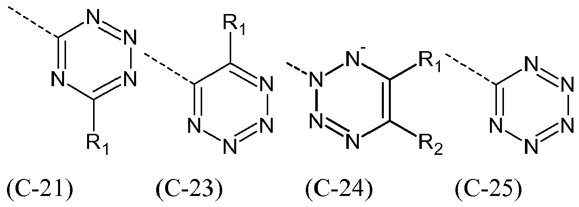 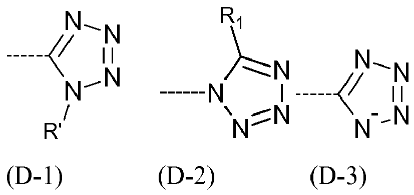 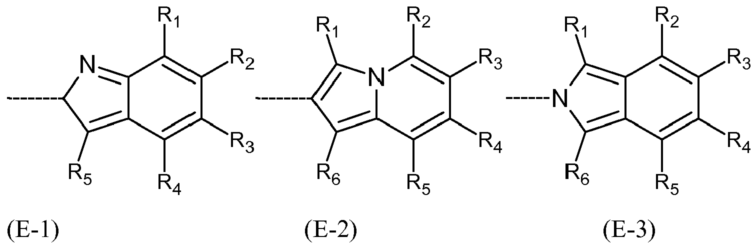 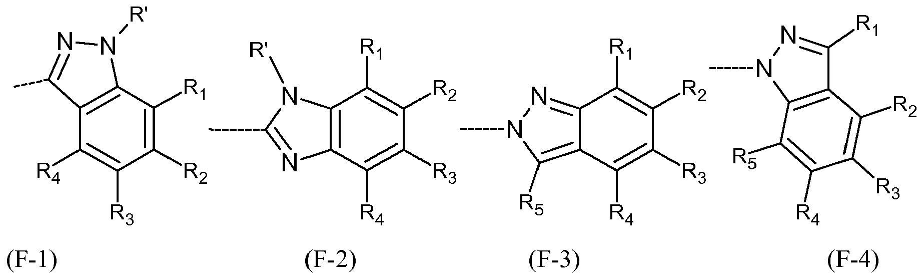 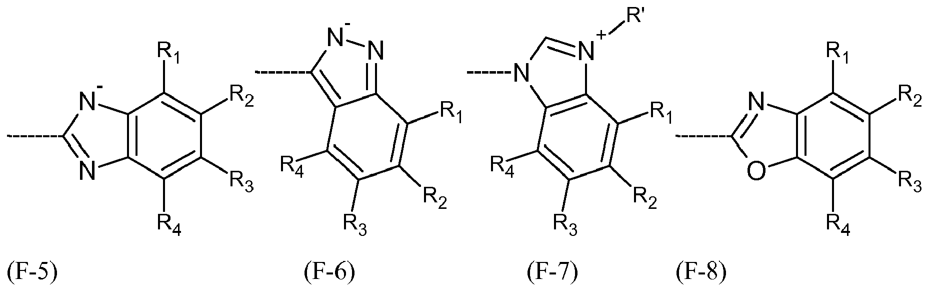 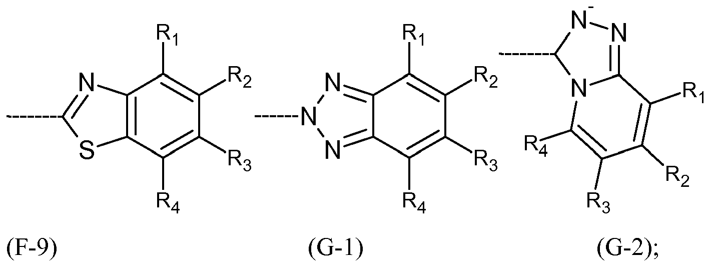 wherein the dotted line represents the bond connecting the substituent of (A-1) to (G-2) on the compound of formula (1)-(30); and, substituents R₁, R₂, R₃, R₄, R₅, and R₆, in as far as present, are independently selected from H, hydrocarbons comprising 1 to 20 carbons and 0 to 15 heteroatoms, halogen, (-F, -Cl, -Br, -I), -NH₂, -OH, and -NO₂.

The device of any one of the preceding claims, wherein any one of said La is independently selected from any one of compounds of formula (2), (3), (4), (31), and (32) below: 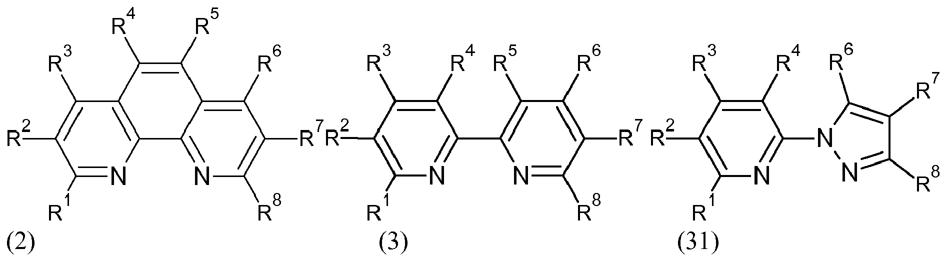 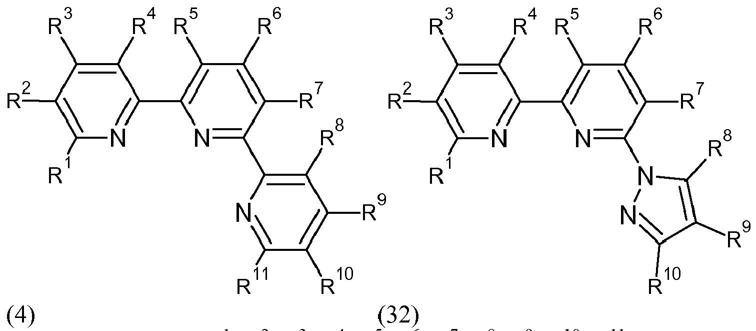 wherein any one of R¹, R², R³, R⁴, R⁵, R⁶, R⁷, R⁸, R⁹, R¹⁰, R¹¹, if applicable, is independently selected from H and from hydrocarbons comprising 1 to 20 carbons and 0 to 15 heteroatoms, halogen, (-F, -Cl, -Br, -I), -NO₂, -NH₂, and -OH.

Further exemplary ligands La are disclosed in Figures 5 to 12 of the co-pending European patent applications EP11156029.8, filed on February 25, 2011, and EP11161739.5, filed on April 8, 2011. The ligands disclosed in these applications (H-1 to H-31, J-1 to J-26, K-1 to K-33, L-1 to L-4, M-1 to M-15, N-1 to N-20, P-1 to P16, Q-1 to Q-63) and their possible substituents, as disclosed on page 28-30 of the co-pending application are totally and entirely incorporated herein by reference.

According to an embodiment, any one of R¹, R², R³, R⁴, R⁵, R⁶, R⁷, R⁸, R⁹, R¹⁰, R¹¹, and of R₁, R₂, R₃, R₄, R₅, and R₆, in as far as the respective substituent is present on the compounds (1) to (32) and their substituents, may thus be independently selected from H, halogen, -NO₂, -OH, -NH₂ and from hydrocarbons comprising 1 to 30 carbons and 0 to 20 heteroatoms (in the case of R¹-R¹¹) or from hydrocarbons comprising 1 to 20 carbons and 0 to 15 heteroatoms (in the case of R₁-R₆).

According to another embodiment, any one of R¹, R², R³, R⁴, R⁵, R⁶, R⁷, R⁸, R⁹, R¹⁰, R¹¹, and of R₁, R₂, R₃, R₄, R₅, and R₆, in as far as the respective substituent is present on the compounds (1) to (32) and their substituents, may thus be independently selected from H, halogen, -NO₂, -OH, NH₂ and from hydrocarbons comprising 1 to 20 carbons and 0 to 15 heteroatoms.

Heteroatoms are preferably selected, independently, from Si, N, P, As, O, S, Se halogen (in particular F, Cl, Br and I), B, Be; more preferably from Si, N, P, O, S, and halogen, most preferably from N, O, S and halogen.

According to an embodiment, any one of said substituents R¹, R², R³, R⁴, R⁵, R⁶, R⁷, R⁸, R⁹, R¹⁰, R¹¹, and of R₁, R₂, R₃, R₄, R₅, R₆, R₇, R₈, and R₉ may be independently selected from the substituents of formulae (A-1) to (G-2) (applicable to R¹-R¹¹), H, halogen (-F, -Cl, -Br, - I), -NO₂, -CN, -OH, -CF₃, substituted or unsubstituted C1-C20 alkyl, C2-C20 alkenyl, C2-C20 alkynyl, and C4 to C20 aryl; wherein, in said substituted or unsubstituted alkyl, alkenyl, alkynyl or aryl, any hydrocarbon group (preferably and if applicable: non adjacent hydrocarbon group) may be replaced by any one selected from the group of -O-, -S-, -S(=O)-, -S(=O)₂-, -Si-, -Ge-, -NR^{A}-, -N=, -BR^{A}-, -PR^{A}-, -P(=O)R^{A}-, -P(=O)OR^{A}-, -C(=O)-, -C(=S)-, -C(=O)O-, -OC(=O)-, -C(=NR^{A})-, -C=NR^{A}-, -NR^{A}C(=O)-, -C(=O)NR^{A}-, -NR^{A}C(=S)- and -C(=S)NR^{A}-;
wherein, if said alkyl, alkenyl, alkynyl and aryl are substituted, the substituents, may, independently, be selected from halogen, -F, -Cl, -Br, -I, -NO₂, -CN, -OH, -CF₃, substituted or unsubstituted C1-C15 alkyl, C2-C15 alkenyl, C2-C15 alkynyl C2-C15 alkynyl, C4 to C18 aryl, wherein any hydrocarbon group of said substituent may be replaced by any one selected from the group of -O-, -S-, -S(=O)-, -S(=O)₂-, -Si-, -Ge-, -NR^{B}-, -N=, -BR^{B}-, -PR^{B}-, -P(=O)R^{B}-, -P(=O)OR^{B}-, -C(=O)-, -C(=S)-, -C(=O)O-, -OC(=O)-, -C(=NR^{B})-, -C=NR^{B}-, - NR^{B}C(=O)-, -C(=O)NR^{B}-, -NR^{B}C(=S)- and -C(=S)NR^{B}-;
wherein, if said alkyl, alkenyl, alkynyl or aryl substituent is further substituted, the substituents of said substituents, if present, may be selected from halogen, -F, -Cl, -Br, -I, - NO₂, -CN, -OH, -CF₃, substituted or unsubstituted C1-C8 alkyl, C2-C8 alkenyl, C2-C8 alkynyl, C5 to C8 aryl, wherein any hydrocarbon group of said substituent may be replaced by any one selected from the group of -O-, -S-, -S(=O)-, -S(=O)₂-, -Si-, -Ge-, -N=, -C(=O)-, -C(=S)-, -C(=O)O-, -OC(=O)-. Further substituents of said further substituents are preferably selected from halogen, -CN and C1 to C4 alkyl, C2-C4 alkenyl and C2-C4 alkynyl, wherein any available hydrogen of said alkyl, alkenyl or alkynyl may be substituted by halogen.

R^{A} may be selected from H and from substituted or unsubstituted C1-C15 alkyl, C2-C15 alkenyl, C2-C 15 alkynyl C2-C 15 alkynyl, C4 to C18 aryl as defined above (including replacement groups). Preferably, R^{A} is selected from H, C1-C10 alkyl, C2-C10 alkenyl, C2-C10 alkynyl, C4-C10 aryl, -CN, wherein said alkyl, alkenyl, alkynyl and/or aryl may be further substituted with -CN, C1-C4 alkyl (partially or totally halogenated) and halogen. More preferably, R^{A} is selected from H, -CN, C1-C5 alkyl, C2-C5 alkenyl, C2-C5 alkynyl, C4 to C6 aryl, which may be further substituted by -CN or halogen.

R^{B} may be selected from H and from substituted or unsubstituted C1-C8 alkyl, C2-C8 alkenyl, C2-C8 alkynyl, C5-C8 aryl as defined above (including replacement groups). Preferably, R^{B} is selected from H, H, C1-C5 alkyl, C2-C5 alkenyl, C2-C5 alkynyl, C4-C6 aryl, -CN, wherein said alkyl, alkenyl, alkynyl and/or aryl may be further substituted with - CN, C1-C4 alkyl (partially or totally halogenated) and halogen. More preferably, R^{B} is selected from H, -CN, C1-C4 alkyl, C2-C4 alkenyl, C2-C4 alkynyl, C4 to C6 aryl, which may be further substituted by -CN or halogen.

According to an embodiment, any one of R_{A}, R_{B} and R_{C} is independently selected from substituents as defined for R^{A}, preferably R^{B} as defined elsewhere in this specification, including preferred embodiments of said substituents R^{A}, preferably R^{B}.

For the purpose of the present specification, any alkyl, alkenyl or alkynyl specified herein may be linear, branched and/or cyclic. In this case, the alkyl, alkenyl and alkynyl has three or more (for example up to 30) carbons, as indicated. Any aryl having 4 or 5 carbons has an appropriate number of ring heteroatoms in order to provide an aromatic substituent ring. The expression "aryl" thus encompasses heteroaryls. According to an embodiment, an aryl is selected from heteroaryls and from aryls lacking any heteroatom.

According to a preferred embodiment, any one of R¹, R², R³, R⁴, R⁵, R⁶, R⁷, R⁸, R⁹, R¹⁰, and R¹¹, in as far as present on the compounds (1) to (32), for example, may independently be selected from the substituents of formulae (A-1) to (G-2), H, halogen, -NO₂, and from hydrocarbons comprising 1 to 20 carbons and 0 to 10 heteroatoms; preferably from H and C 1 to C10 hydrocarbons comprising 0 to 10 heteroaotms; more preferably from H and C 1 to C5 hydrocarbons comprising 0 to 5 heteroatoms.

According to a preferred embodiment, any one of R₁, R₂, R₃, R₄, R₅, R₆, R₇, R₈, and R₉ in as far as present on the substituents (A-1) to (G-2) above or on ligands, such as ligands Xb, for example, may be independently selected from H, halogen, -NO₂ and from hydrocarbons comprising 1 to 15 carbons and 0 to 10 heteroatoms; preferably from H and C1 to C10 hydrocarbons comprising 0 to 10 heteroaotms; more from preferably H and C1 to C5 hydrocarbons comprising 0 to 5 heteroatoms.

According to an embodiment, any one of R¹, R², R³, R⁴, R⁵, ,R⁶, R⁷, R⁸, R⁹, R¹⁰, R¹¹, R₁, R₂, R₃, R₄, R₅, R₆, R₇, R₈, R₉, R' and R", if applicable, is selected independently from the substituents of formulae (A-1) to (G-2) (only applicable to R¹-R¹¹), H, and from C1-C10 alkyls, C2-C10 alkenyls C2-C10 alkynyls, and C5-C12 aryls (preferably C6-C12 aryls), wherein in said alkyls, alkenyls, alkynyls and aryls one, several or all available hydrogen may be replaced by halogen and/or by -CN, wherein any one of said R¹ to R¹² and R₁ to R₆ may further be selected from halogen, -C≡N (-CN), -NO₂. Said aryl may or may not be further substituted by C1-C4 alkyl, halogen and -CN.

According to an embodiment, any one of R¹, R², R³, R⁴, R⁵, R⁶, R⁷, R⁸, R⁹, R¹⁰, R¹¹, R₁, R₂, R₃, R₄, R₅, R₆, R₇, R₈, R₉, R' and R", in as far as present, is selected independently from the substituents of formulae (A-1) to (G-2) (in the case of R¹-R¹¹), H, and from C1-C6 alkyls, C2-C6 alkenyls C2-C6 alkynyls, and C6-C10 aryls, wherein in said alkyls, alkenyls, alkynyls and aryls one, several or all available hydrogen may be replaced by halogen and/or -CN, wherein any one of said R¹ to R¹¹ and R₁ to R₆ may further be selected from halogen and from -C≡N (-CN). Said aryl may or may not be further substituted by C1-C4 alkyl, halogen and -CN.

According to an embodiment, any one of R¹, R², R³, R⁴, R⁵, R⁶, R⁷, R⁸, R⁹, R¹⁰, R¹¹, R₁, R₂, R₃, R₄, R₅, R₆, R₇, R₈, R₉, R' and R", in as far as present, is selected independently, from the substituents of formulae (A-1) to (G-2) (in the case of R¹-R¹¹), H, and from C1-C6, preferably C1-C4, more preferably C1-C3 alkyl, said alkyl, being optionally partially or totally substituted by halogen, wherein any one of said R¹ to R¹² and R₁ to R₆ may further be selected from halogen and from -C≡N.

According to an embodiment, any one of R¹, R², R³, R⁴, R⁵, R⁶, R⁷, R⁸, R⁹, R¹⁰, R¹¹, R₁, R₂, R₃, R₄, R₅, R₆, R₇, R₈, R₉, in as far as present, is selected, independently, from the substituents of formulae (A-1) to (G-2) (this only applies to R¹-R¹¹), H, halogen, -CN The latter to not applicable to R₇ - R₉) and from C1-C6, preferably C1-C4 and most preferably C1-C3 alkyl, said alkyl being possibly substituted by halogen.

According to an embodiment, R' and R" are selected independently from H and from C1-C6 linear branched or cyclic alkyl, said alkyl being possibly and optionally partially or totally substituted by halogen.

According to an embodiment, R¹, R², R³, R⁴, R⁵, R⁶, R⁷, R⁸, R⁹, R¹⁰, R¹¹, in as far as present, are selected independently from the substituents of formulae (A-1) to (G-2), H, halogen, - CN, and from C1-C6 alkyl and alkenyl, wherein any available hydrogen of said alkyl and alkenyl may or may not be replaced by halogen and/or -CN. Preferably, R¹, R², R³, R⁴, R⁵, R⁶, R⁷, R⁸, R⁹, R¹⁰, R¹¹, in as far as present, are selected independently from H, halogen, - CN, and from C1-C4 alkyl, said alkyl being optionally totally or partially halogenated. Preferably, R¹ R², R³, R⁴, R⁵, R⁶, R⁷, R⁸, R⁹, R¹⁰, R¹¹, in as far as present, are selected independently from H, halogen, -CN, -CF3 and C1-C3 alkyl.

According to an embodiment, R₁, R₂, R₃, R₄, R₅, R₆, R₇, R₈, R₉, in as far as present, are selected independently from H, halogen, -CN, and from C1-C6 alkyl and alkenyl, wherein any available hydrogen of said alkyl and alkenyl may or may not be replaced by halogen and/or -CN. Preferably, R₁, R₂, R₃, R₄, R₅, R₆, R₇, R₈, R₉, in as far as present, are selected independently from H, halogen, -CN, and from C1-C4 alkyl, said alkyl being optionally totally or partially halogenated. Preferably, R₁, R₂, R₃, R₄, R₅, R₆, R₇, R₈, R₉, in as far as present, are selected independently from H, halogen, -CN, -CF₃ and C1-C4 alkyl. R₇ -R₉ are preferably not selected from halogen and/or CN.

Substituents R¹ R², R³, R⁴, R⁵, R⁶, R⁷, R⁸, R⁹, R¹⁰, R¹¹, R₁, R₂, R₃, R₄, R₅, R₆, R₇,R₈, R₉, other than H are suitable to adjust the oxidation potential of the metal complex. Without wishing to be bound by theory, it is believed that such substituents can help obtaining electrochemical devices with higher V_{OC} values, and to adjust the oxidation potential of the redox couple to the properties of the dye.

The redox-active compound may comprise one or more co- and/or spectator ligands, such as one or more ligands Xb in accordance with the complex of formula (I), for example. The spectator ligands Xb may be independently selected, for example, from H₂O, Cl⁻, Br⁻, I⁻, CN, NCO, NCS, NCSe, NH₃, NR₇R₈R₉, and PR₇R₈R₉, wherein R₇, R₈, and R₉ are selected independently from substituted or unsubsituted alkyl, alkenyl, alkynyl and aryl. According to an embodiment, said alkyl, alkenyl and aryl is independently selected from substituted or unsubstituted C1-C20 alkyl, C2-C20 alkenyl, C2-C20 alkynyl, and C4 to C20 aryl as defined elsewhere in this specification, and preferred embodiments of alkyl, alkenyl, alkynyl and aryl as defined for R¹-R¹¹ and/or R₁-R₆ elsewhere in this specification. Furthermore, two or all three of R₇, R₈, and R₉ may connected with each other so as to provide a cyclic or polycyclic ligand.

Since n may be an integer from 1 to 6, the complex of formula (I) contains at least one but possibly up to six ligands La. The different embodiments are shown below at the example of complexes of formulae (II)-(XX):

In case n is 1 and L1 is a monodentate ligand, m is 5:
(II) M L1 X1 X2 X3 X4 X5, wherein X1 to X5 may be the same or different.

In case n is 1 and L1 is a bidentate ligand (m is 4):
(III) M L1 X1 X2 X3 X4, wherein X1 to X4 may be the same or different.

In case n is 1 and L1 is a tridentate ligand (m is 3):
(IV) M L1 X1 X2 X3, wherein X1 to X3 may be the same or different.

In case n is 1 and L1 is a tetradentate ligand (m is 2):
(V) M L1 X1 X2, wherein X1 to X2 may be the same or different.

In case n is 2 and L1 and L2 are both monodentate ligands (m is 4):
(VI) M L1 L2 X1 X2 X3 X4, wherein L1 and L2 may be the same or different, and any one of X1 to X4 may be the same or different.

In case n is 2 and L1 and L2 are both bidentate ligands (m is 2):
(VII) M L1 L2 X1 X2, wherein L1 and L2 may be the same or different, and X1 and X2 may be the same or different.

In case n is 2, L1 and L2 are a mono- and a bidentate ligands, respectively (m is 3):
(VIII) M L1 L2 X1 X2 X3, wherein L1 and L2 are different any one of X1 to X3 may be the same or different.

In case n is 2 and L1 and L2 are a mono- and a tridentate ligand, respectively (m is 2):
(IX) M L1 L2 X1 X2, wherein L1 and L2 are different and any one of X1 and X2 may be the same or different.

In case n is 2, L1 is a bidentate ligand and L2 is a tridentate ligand (m is 1):
(X) M L 1 L2 X1, wherein L1 and L2 are different.

In case n is 2 and L1 and L2 are both tridentate ligands (m is 0):
(XI) M L1 L2, wherein L1 and L2 may be the same or different.

In case n is 3 and L1, L2 and L3 are all monodentate ligands (m is 3):
(XII) M L1 L2 L3 X1 X2 X3, wherein any one of L1 to L3 may be the same or different and any one of X1 to X3 may be the same or different.

In case n is 3 and L1, L2 and L3 are all bidentate ligands (m is 0):
(XIII) M L1 L2 L3, wherein any one of L1, L2 and L3 may be, independently, the same or different from any other of L1, L2, L3, respectively. For example, L1 to L3 may all be the same.

In case n is 3, L1 is a bidentate ligand and, L2 and L3 are both monodentate ligands (m is 2):
(XIV) M L1 L2 L3 X1 X2, wherein L1 is different from L2 and L3, L2 and L3 may be the same or different, X1 and X2 may be the same or different.

In case n is 3, L1 is a tridentate ligand, L2 and L3 are both monodentate ligands (m is 1):
(XV) M L1 L2 L3 X1, wherein L1 is different from L2; L3 and L2 may be the same or different.

In case n is 3, L1 is a tridentate ligand, L2 is a bidentate ligand and L3 is a monodentate ligand (m is 0):
(XVI) M L1 L2 L3, wherein L1, L2 and L3 are all different.

In case n is 4, L1 is a bidentate ligand, L2 to L4 are monodentate ligands (m is 1):
(XVII) M L1 L2 L3 L4 X1, wherein L1 is different from L2 to L4; and any one of L2 to L4 may be the same or different.

In case n is 4, L1 is a tridentate ligand, L2 to L4 are monodentate ligands (m is 0):
(XVIII) M L1 L2 L3 L4, wherein L1 is different from L2 to L4; and any one of L2 to L4 may be the same or different.

In case n is 4 and L1 to L4 are all monodentate ligands (m is 2):
(XIX) M L1 L2 L3 L4 X1 X2, wherein any one of L1 to L4 may be the same or different and X1 and X2 may be the same or different.

In case n is 5, L1 is a bidentate ligand and L2 to L5 are all monodentate ligands (m is 0):
(XX) M L1 L2 L3 L4 L5, wherein L1 is different from L2 to L5 but L2 to L5 may be the same or different.

In the other cases where n is 5 (or 6), m is 1 (or 0, respectively), L1 to L5 (or L1 to L6, respectively), are all monodentate ligands, which may be the same or different.

From the above it becomes apparent that the complexes of the invention may be homoleptic (contain identical ligands La with m being 0) or heteroleptic (containing at least two different ligands).

Preferably, n is 1, 2 or 3, more preferably 2 or 3. If n is 2, L1 and L2 are preferably identical. If n is 3, L1 to L3 are preferably identical.

According to an embodiment of the complex of the invention, n is 2 (M L1 L2) or 3 (M L1, L2, L3) and m is 0 in both cases.

According to an embodiment, the complex of the invention comprises at least 2 or at least 3 ligands La of identical structure (L1=L2 or L1=L2=L3, respectively).

According to an embodiment, said charge transport layer comprises one selected from an organic solvent, one or more ionic liquids, an electronically conducting, hole or electron transporting material, and combinations thereof. According to a preferred, the charge transport layer is a solvent-based electrolyte.

It is noted that, according to the knowledge of the present inventors, tetracyanoborate has been used as counter anion, which is stable compared to the hexa flurophospate anion. Also, the added tetracyanoborate anion is compatible with ionic liquids that contain the same anion as part of an ionic liquid electrolyte to electrochemical device, as reported, for example, in WO2007/093961 A1, where dye-sensitized solar cells using the iodide, triiodide redox couple are disclosed. The use of salts comprising the metal-based redox couple together with tetracyanoborate in devices containing solvents allows, surprisingly, to conveniently and efficiently use tetratcyanoborate not only in ionic liquids but also in solvent-based devices, where this compound had not yet been used so far.

According to an embodiment, the device of the invention is selected from a photoelectrochemical device, an optoelectronic device, an electrochemical battery, (for example a lithium ion battery), a double layer capacitor, a light emitting device, an electrochromic or photo-electrochromic device, an electrochemical sensor, a biosensor, an electrochemical display and an electrochemical capacitor, (for example a super capacitor).

The present invention also relates to electrochemical and/or optoelectronic device comprising the complex of the invention. In general, electrochemical devices are devices comprising at least one electrode at which an oxido-reductive process takes place. In general, an electrochemical device is a device in which a chemical reactions take place due to external voltage, or voltage is created due to a chemical reaction.

According to an embodiment, the device of the invention is a photoelectric conversion device, a photovoltaic cell, preferably a dye-sensitized solar cell or photovoltaic cell. preferably, the device is a regenerative dye-sensitized solar cell.

According to an embodiment, said first electrode is a semiconductor electrode comprising a surface facing the charge transport layer of the device, wherein on said surface, there is adsorbed a dye so as to form a layer on said surface, wherein said dye is preferably selected from dyes carrying no charge or carrying a positive charge when being adsorbed on said surface. This is the case, for example, with dye-sensitized solar cells and electrochromic or photoelectrochromic devices, such as disclosed, for example, in US6426827 and US6067184.

Said first electrode may also be a photoanode, an anode or a cathode (for example in certain photoelectrochromic devices). The second electrode may be, for example, a counterelectrode.

According to an embodiment, said dye, when adsorbed on said surface of a semiconductor electrode, lacks any negatively charged, free group. For example, the dye lacks any non-anchored, negatively charged anchoring group. Anchoring groups may be selected, for example, from -COO-, -PO₃H⁻, -PO₄H⁻, -SO₃H⁻, SO₄H⁻, -CONHOH⁻, just to mention a few. Such negatively charged anchoring groups are generally provided on the dye so as to anchor the latter to the semiconductor electrode. Frequently, a dye comprises two or even more anchoring groups, thereby ensuring tight binding of the dye to the semiconductor electrode.

Without wishing to be bound by theory, the present inventors envisage that in many circumstances, there may be groups that are on the sensitizer which is anchored to the semiconductor electrode. The groups can thus provide a negative charge to the anchored dye. This in turn may cause attraction between positively charged redox active species and the dye groups. Without wishing to be bound by theory, the present inventors envisage that this is why the dye-sensitized solar cells disclosed in WO 03/038508 had a poor performance.

Therefore, according to an embodiment, the dye preferably comprises no negatively charged groups per dye molecule. According to an embodiment, this also applies to organometallic compounds, ruthenium dyes and the like, such as disclosed for example, in EP0613466, EP0758337, EP 0983282, EP 1622178, WO2006/038823. Therefore, the dye may be synthesized to have anchoring groups but without negative charge on the sensitizer as from the beginning. A further possibility is to ensure that all or an important majority anchoring groups are bound to the semiconductor surface in case the dye has two or more negatively charged anchoring groups. The term "negatively charged anchoring group" preferably but not necessarily also encompasses anchoring groups that may become negative due to deprotonation. The anchoring group is negatively charged in case it is not bound and, at the same time, present in deprotonated form.

The method of the present invention preferably comprises the step of adding to said charge transport layer a salt comprising tetracyanoborate ([B(CN)₄]⁻) and a cationic metal complex of formula I. In particular, tetracyanoborate is advantageously added to electrochemical devices, conveniently as a salt with the complex functioning as a redox-couple. In this way, not only are (other) anions avoided, which have no function and/or which may even unfavorably affect performance or stability of the device, but, in contrast, addition of a compound is achieved in an economic, practical and efficient way, which compound improves stability of such devices, including devices, in which tetracyanoborate was not used and/or could not be added without a further step.

The present invention will now be illustrated by way of examples. These examples do not limit the scope of this invention, which is defined by the appended claims.

### Examples:

### Example 1: Synthesis of Co(bpy)₃[B(CN)₄]₂, Co(bpy)₃[B(CN)₄]₃ cobalt complexes

CoCl₂.6H₂O (0.25 g) was dissolved in 5 ml of water and to this added a methanolic solution of 2,2'-bipyridine (0.55 g) drop wise while stirring. After 5 minutes of stirring potassium tetracyanoborate (1.2 g) in water was added. The precipitated complex was filtered, washed with water and dried under vacuum to isolate Co(bpy)₃[B(CN)₄]_{2.} CoCl₂.6H₂O (0.25 g) was dissolved in 5 ml of water and to this was added a methanolic solution of 2,2'-bipyridine (0.55 g) drop wise while stirring. After 5 minutes of stirring was added one molar equivalent of bromine solution in methanol while stirring. After 5 minutes more stirring the solution was filtered to remove any precipitate. Then the solvent was evaporated using a rotavapor under vacuum and re-dissolved in methanol solution (15 ml) and filtered. To the filtrate was added potassium tetracyanoborate (1.2 g) in water. The precipitated complex was filtered, washed with water and dried under vacuum to isolate Co(bpy)₃[B(CN)₄]₃.

### Example 2: Preparation of Electrolytes and absorption spectra

The cobalt based electrolyte was prepared using 0.22 M of Co(II) and 0.05 M of Co(III) in a mixture of valeronitrile/acetonitrile (15:85 v/v). The additives are 0.1M LiClO4, and 0.2 M tert-butylpyridine.

For comparison, high performance iodide based electrolyte coded Z960 was prepared. This electrolyte contained 1.0 M 1,3-dimethylimidazolium iodide (DMII), 0.03M iodine, 0.1M guanidinium thiocyanate, 0.5M *tert*-butylpyridine and 0.05M LiI in a mixture of valeronitrile/acetonitrile (15:85 v/v). The N1 electrolyte was as Z960 but had the same concentrations of *tert*-butylpyridine and Li⁺ as the Co²⁺/Co³⁺ containing formulation of the invention.

Figure 1 compares the absorption spectra of the complex-based electrolyte of the invention with the iodide based electrolyte Y123 (measurements were performed with the electrolytes diluted 200 times in acetonitrile), showing reduced absorption of the electrolyte of the invention over the range of wavelength of 350 to 480 nm.

### Example 3: Preparation of an organic, cyclopentadithiophene bridged donor-acceptor dye

Dye Y123 (3-{6-{4-[bis(2',4'-dihexyloxybiphenyl-4-yl)amino-]phenyl}-4,4-dihexyl-cyclo-penta-[2,1-b:3,4-b']dithiphene-2-yl}-2-cyanoacrylic acid) is prepared in accordance with the scheme shown in Figure 4.

### Example 3: Preparation of solar cells

A photoanode consisted of 2µm thin transparent nanoporous TiO₂ (anatase) film covered by a 5µm thick light-scattering layer consisting of 400 nm sized TiO₂ (anatase) particles. Platinized FTO glass was used as the counter electrode, as disclosed in Yum, J. H.; Jang, S. R.; Humphry-Baker, R.; Grätzel, M.; Cid, J. J.; Torres, T.; Nazeeruddin, M. K. Langmuir 2008, 24, 5636).

The TiO₂ film was stained with Y123 (Example 3) by immersing it for 7h in a 0.1mM dye solution in tert-butanol/acetonitrile mixture (1:1 v/v).

For photovoltaic measurements of the DSCs, the irradiation source was a 450 W xenon light source (Osram XBO 450, Germany) with a filter (Schott 113), whose power was regulated to the AM 1.5G solar standard by using a reference Si photodiode equipped with a colour matched filter (KG-3, Schott) in order to reduce the mismatch in the region of 350-750 nm between the simulated light and AM 1.5G to less than 4%. The measurement of incident photon-to-current conversion efficiency (IPCE) was plotted as a function of excitation wavelength by using the incident light from a 300 W xenon lamp (ILC Technology, USA), which was focused through a Gemini-180 double monochromator (Jobin Yvon Ltd.).

The results presented in Table 1 and Figure 1 show that the performance of Co^{2+/}Co³⁺ is superior to that of the I⁻/I₃⁻ based redox electrolyte, the V_{OC} and J_{SC} values being increased by 100 mV and 1mA/cm² respectively, while the fill factor (ff) was hardly affected. The efficiency improved from 7.2% to 8.8% when changing from iodine to cobalt based redox system. Overall the efficiencies are remarkably high for DSSCs with such thin TiO₂ films used in this study. Our champion DSSC with cobalt based electrolyte reached even 9.6% efficiency under 1 sun light intensity, which shows that the device performance is better.

**Table 1: Performances of DSSC employing I⁻/I₃⁻ and [Co(II)(bpy)₃](B(CN)₄)₂ / [Co(III)(bpy)₃](B(CN)₄)₃ based electrolytes.**

| Redox mediator | V_{OC} (mV) | J_{SC} (mA cm⁻²) | FF | PCE (%) |
|---|---|---|---|---|
| (Z960) I⁻/I₃⁻ | 757 | 13.6 | 0.70 | 7.2 |
| (N1) I⁻/I₃⁻ | 733 | 13.8 | 0.62 | 6.3 |
| Invention | 855 | 14.6 | 0.70 | 8.8 |

Figure 2 compares IPCE spectra of the device in accordance with an embodiment of the invention with the device using the I⁻/I₃⁻-based electrolyte (Z960). It can be seen from Figure 2 that for the Co²⁺/Co³⁺ redox mediator, the IPCE spectrum is significantly enhanced in the blue and red region with respect to that observed for the I⁻/I₃⁻ based electrolyte. The increased blue response of the photocurrent between 400 and 450 nm is attributed to lower light absorption of the Co²⁺/Co³⁺ redox mediator compared to the I⁻/I₃⁻-based electrolyte in this wavelength domain, as shown by the absorption spectra in Figure 1. However, the main contribution to the increase of the Jsc (Table 1) arises from the red shift of the IPCE spectrum starting at around 600nm. The origin of this interesting and beneficial effect is surprising and the inventors do not have a straightforward explanation for these results.

### Example 4: Synthesis of Bipyridine-Pyrazole Ligand (bpy-pz)

tBuOK (2g) was added to a suspension of pyrazole (1g) in dmso (80 mL) and stirred until a clear solution has formed. 6-chloro-2,2'-bipyridine (1g, from HetCat) was added slowly by portion and the mixture heated at 140 °C for 14 hours. After cooling down to room temperature, water was added and the precipitate filtered and wash with water. The compound was further purified by silica gel chromatography column using Ethyl acetate/diethyl ether as eluent, leading to an off-white crystalline solid (450 mg, yield 39 %). Spectroscopic analysis are as reported in the literature (*Inorg. Chem.* **1991**, *30,* 3733).

### Example 5: Synthesis of Coll and CoIII Complexes Co(bpy-pz)₂rB(CN)₄]₂ and Co(bpy-PZ)₂[B(CN)₄]₃

91 mg (0.382 mmol, excess) of CoCl₂*6H₂O were dissolved in 25 mL of water while in another flask 93 mg (0.418 mmol) of the pyridine-pyridine-pyrazole ligand of Example 4 were dissolved in 25 mL of acetone. The solutions were combined and heated to 55°C for 2h. After 5 minutes of stirring potassium tetracyanoborate (1.2 g) in water was added. The mixture was stored overnight at 3 °C for precipitation. The precipitated complex was filtered, washed with water and dried under vacuum to isolate Co(bpy-pz)₂[B(CN)₄]₂.

91 mg (0.382 mmol, excess) of CoCl₂*6H₂O were dissolved in 25 mL of water while in another flask 93 mg (0.418 mmol) of the pyridine-pyridine-pyrazole ligand of Example 4 were dissolved in 25 mL of acetone. The solutions were combined and heated to 55°C for 2h. After 5 minutes of stirring was added one molar equivalent of bromine solution in methanol while stirring. After 5 minutes more stirring the solution was filtered to remove any precipitate. Then the solvent was evaporated using a rotavapour under vacuum and dissolved in methanol solution (15 ml) and filtered. To the filtrate was added potassium tetracyanoborate (1.2 g) in water. The precipitated complex was filtered, washed with water and dried under vacuum to isolate Co(bpy-pz)₂[B(CN)₄]₃.

### Example 6: Preparation of Dye Sensitized Solar Cell Using the Complex-Based Redox-Couple of Example 5

The solar cells are prepared as discussed in Example 3.

## Claims

1. An electrochemical and/or optoelectronic device comprising a first and a second electrode and, between said first and second electrode, a charge transport layer, said a charge transport layer comprising tetracyanoborate ([B(CN)₄]⁻) and a cationic metal complex of formula I:
M (La)ₙ (Xb)ₘ (I)
wherein:
M is a transition metal, preferably a 1^{st} row transition metal, for example Cobalt;
n is an integer from 1 to 6 and a is a consecutive number of a set of integers (1, ..., n), so that there are n ligands L1, ..., Ln;
any La (L1, L2, ... , Ln) is independently selected from mono-, bi-, and tridentate ligands,
comprising a substituted or unsubstituted ring or ring system, said ring or ring system comprising at least one nitrogen atom;
m is 0 or an integer from1 to 5 and, if m≥1, b is a consecutive number of a set of integers (1, ..., m), so that, if m≥1, there are m ligands X1, ... , Xm;
any Xb is independently a co-ligand; such as H₂O, Cl⁻, Br⁻, I⁻, CN⁻, NCO⁻, NCS⁻, NCSe⁻, NH₃, NR₇R₈R₉, and PR₇R₈R₉, wherein R₇, R₈, and R₈ are selected independently from substituted or unsubsituted alkyl, alkenyl, alkynyl and aryl; and,
wherein n and m equal the appropriate number of ligands present on metal M.

2. The device of claim 1, wherein any La (L1, ... , Ln) is independently selected from substituted and unsubstituted pyridine or polypyridine ligand, substituted and unsubstituted pyrazole, substituted and unsubstituted pyrazine, substituted and unsubstituted triazole, substituted and unsubstituted pyridazine, substituted and unsubstituted imidazole; wherein substituents are independently selected from hydrocarbons comprising 1 to 40 carbons and 0 to 20 heteroatoms, halogen, (-F, -Cl, -Br, -I), -NO₂, -NH₂ and -OH.

3. The device of claim 1, wherein said charge transport layer comprises an organic solvent and/or comprises one or more ionic liquids.

4. The device of any one of the preceding claims, wherein said first electrode is a semiconductor electrode comprising a surface facing the charge transport layer of the device, wherein on said surface, there is adsorbed a dye so as to form a layer on said surface, wherein said dye is preferably selected from dyes carrying no charge or carrying a positive charge when being adsorbed on said surface.

5. The device of claim 4, wherein said dye when adsorbed on said surface, lacks any negatively charged, free (non-anchored) anchoring group.

6. The device of claim 4 or 5, wherein said dye comprises a single anchoring group, by way of which said dye is attached to said surface.

7. The device of any one of the preceding claims, which is selected from a photoelectrochemical device, an optoelectronic device, an electrochemical battery, (for example a lithium ion battery), a double layer capacitor, a light emitting device, an electrochromic or photo-electrochromic device, an electrochemical sensor, a biosensor, an electrochemical display and an electrochemical capacitor, (for example a super capacitor).

8. The device of any one of the preceding claims, which is a photoelectric conversion device, preferably a dye-sensitized solar cell or photovoltaic cell.

9. The device of any one of the preceding claims, wherein n is an integer of 1 to 3, preferably 2 or 3.

10. The device of any one of the preceding claims, wherein any one of said ligands La is independently selected from any one of the compounds of formula (1) to (30) below: 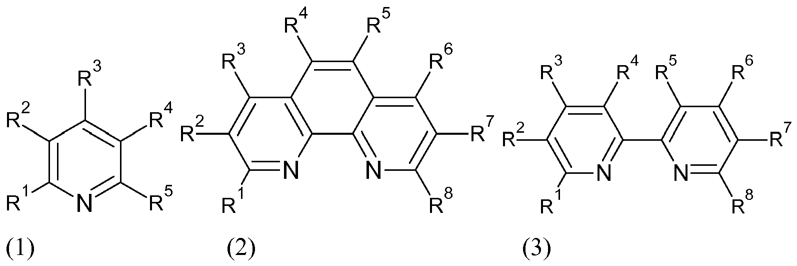 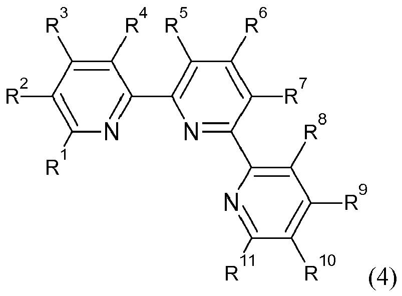 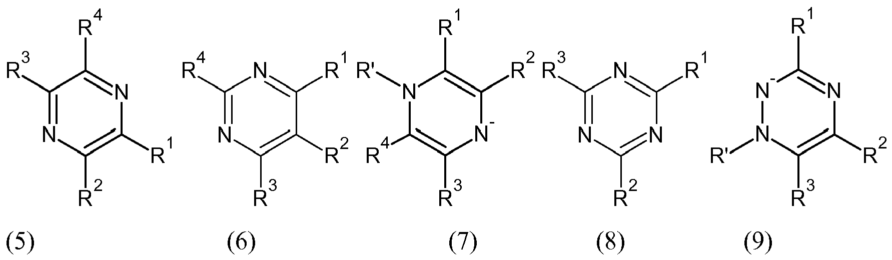 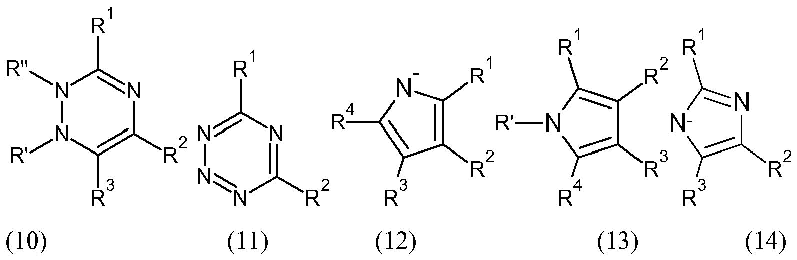 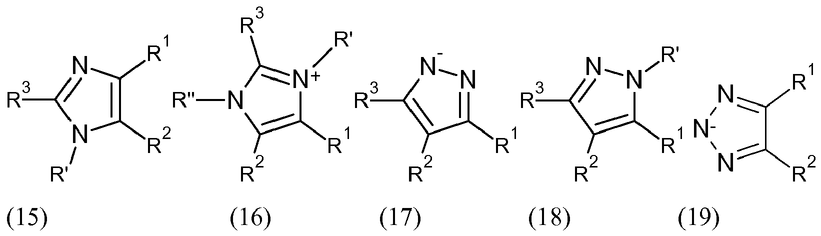 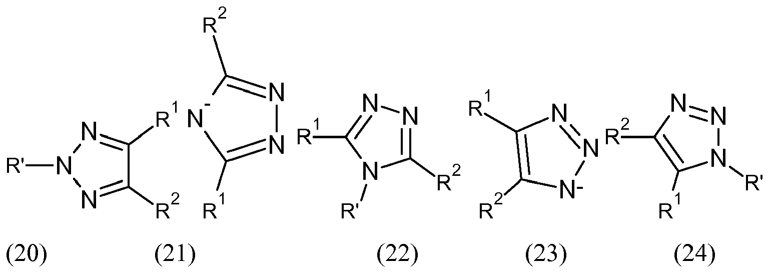 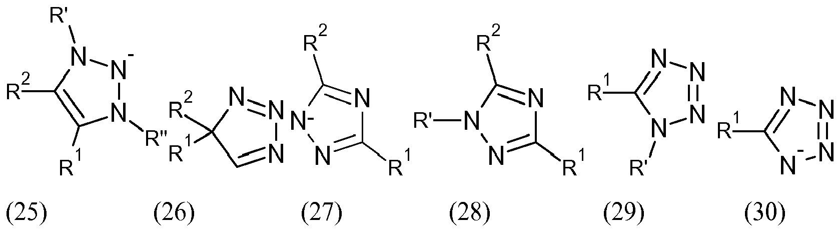 wherein any one of R¹, R², R³, R⁴, R⁵, R⁶, R⁷, R⁸, R⁹, R¹⁰, and R¹¹, in as far as present/applicable, is independently selected from H, from hydrocarbons comprising 1 to 30 carbons and 0 to 20 heteroatoms, halogen, (-F, -Cl, -Br, -I), -NO₂, -NH₂, and -OH; wherein R' and R", if applicable, are independently selected from H and substituents -CR_{A}R_{B}R_{C}, wherein R_{A}, R_{B}, and R_{C} are independently selected from H and from hydrocarbons comprising 1 to 30 carbons and 0 to 20 heteroatoms, halogen, (-F, -Cl, -Br, -I), and wherein R_{A} may also be selected from -NO₂, -NH₂ and -OH if R_{B} and R_{C} are not halogen, -NO₂, - NH₂ or -OH.

11. The device of claim 10, wherein any one of R¹, R², R³, R⁴, R⁵, R⁶, R⁷, R⁸, R⁹, R¹⁰, and R¹¹, if applicable, is independently selected from halogen, -NO₂, -OH, -NH₂, hydrocarbons comprising 1-30 carbons and 0-20 heteroatoms, and from the substituents of formula (A-1) to (G-2) below: 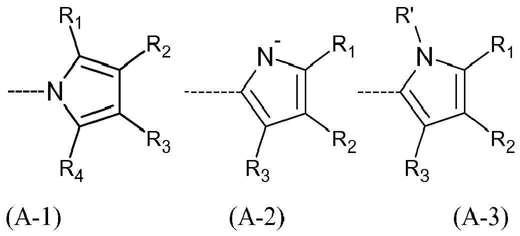 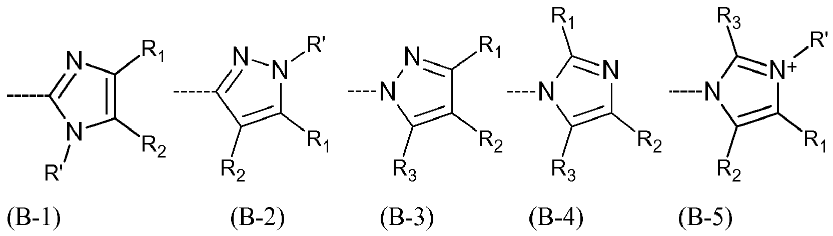 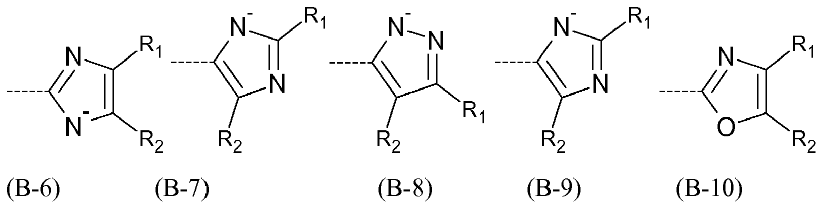 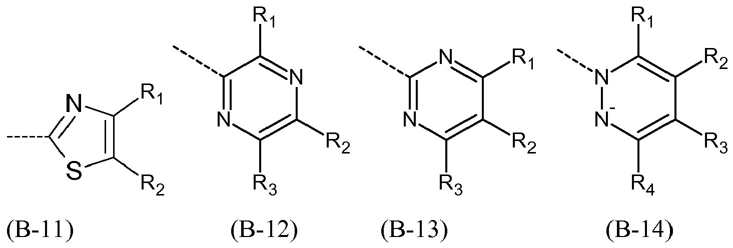 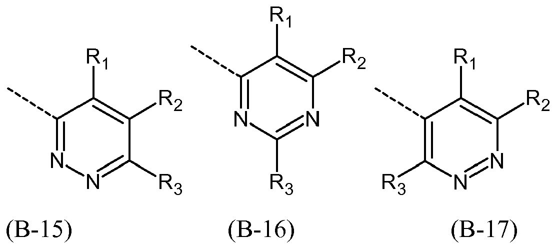 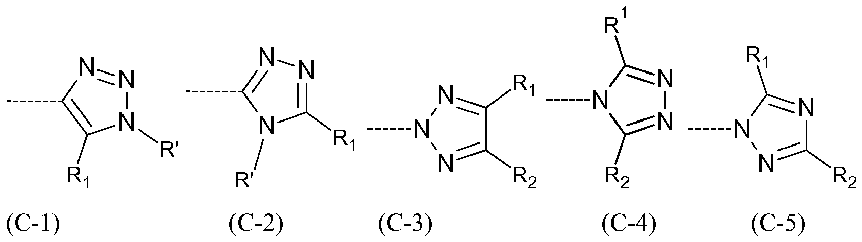 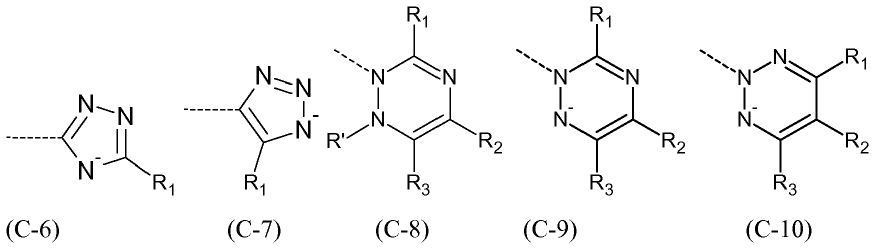 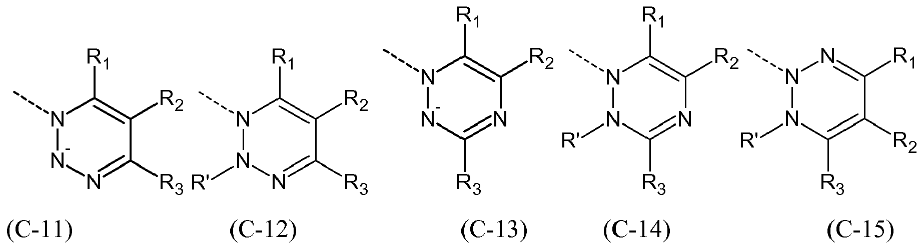 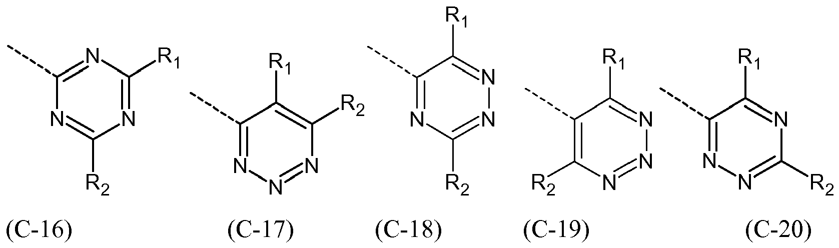 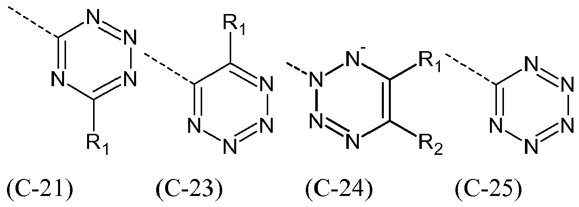 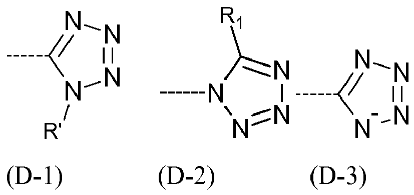 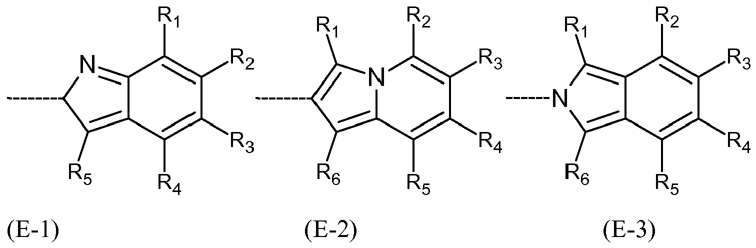 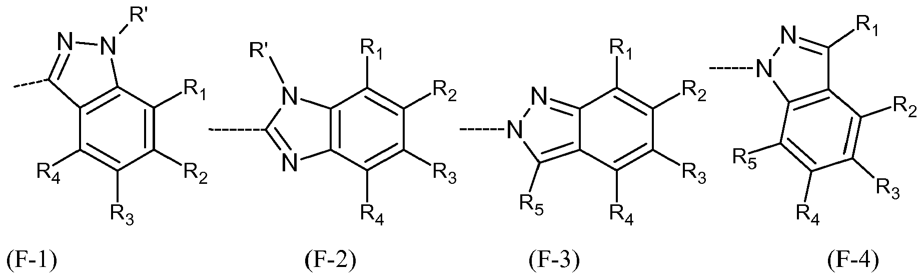 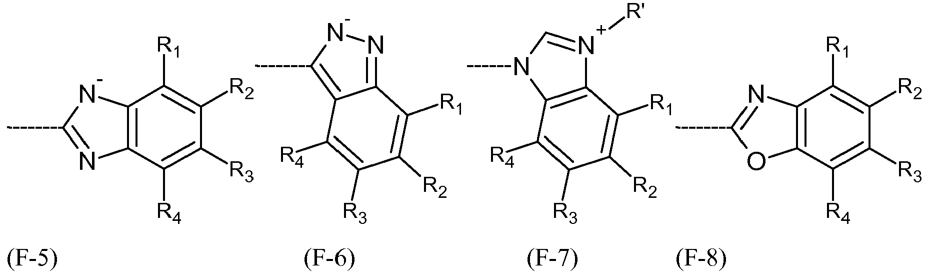 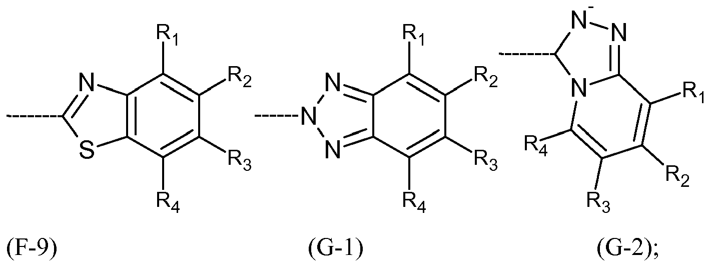 wherein the dotted line represents the bond connecting the substituent of (A-1) to (G-2) on the compound of formula (1)-(29); and, substituents R₁, R₂, R₃, R₄, R₅, R₆, and R₇, in as far as present, are independently selected from H, hydrocarbons comprising 1 to 20 carbons and 0 to 20 heteroatoms, halogen, (-F, -Cl, -Br, -I), and -NO₂.

12. The device of any one of the preceding claims, wherein any one of said La is independently selected from any one of compounds of formula (2), (3), (4), (31), and (32) below: 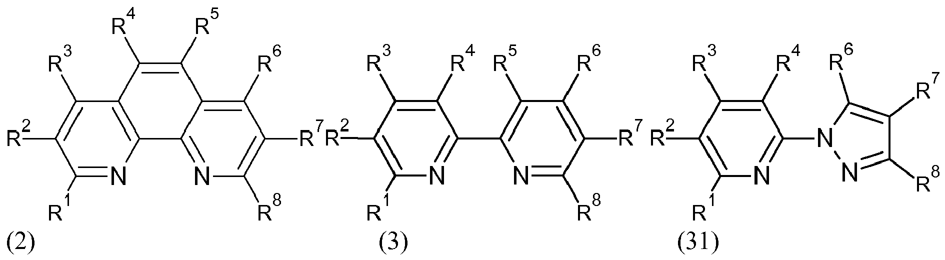 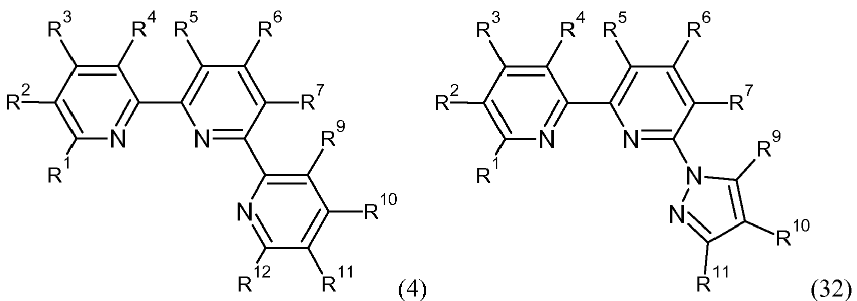 wherein any one of R¹, R², R³, R⁴, R⁵, R⁶, R⁷, R⁸, R⁹, R¹⁰, and R¹¹, if applicable, is independently selected from H and from hydrocarbons comprising 1 to 20 carbons and 0 to 15 heteroatoms, halogen, (-F, -Cl, -Br, -I), and -NO₂.

13. The device of any one of the preceding claims, wherein n is 3, b is 0 and/or wherein the ligands L1, L2, L3 are independently selected from compounds of formulae (2), (3) and (31).

14. The device of any one of the preceding claims, wherein n is 2, b is 0 or 1, and/or wherein L1 and L2 are selected independently from the compounds of formulae (4) and (32).

15. A method of preparing a electrochemical device, the method comprising the steps of:
- providing a first and a second electrode;
- providing a charge transport layer;
- adding to said charge transport layer a salt comprising tetracyanoborate ([B(CN)₄]⁻) and a cationic metal complex of formula I:
M (La)ₙ (Xb)ₘ (I)
wherein:
M is a transition metal, preferably a 1^{st} row transition metal, for example Cobalt;
n is an integer from 1 to 6 and a is a consecutive number of the set of integers (1, ..., n), so that there are n ligands L1, ..., Ln;
any La (L1, L2, ... , Ln) is independently selected from mono-, bi-, and tridentate ligands,
comprising a substituted or unsubstituted ring or ring system, said ring or ring system comprising at least one nitrogen atom;
m is 0 or an integer from1 to 5 and, if m≥1, b is a consecutive number of a set of integers (1, ..., m), so that, if m≥1, there are m ligands X1, ... , Xm;
any Xb is independently a co-ligand; such as H₂O, Cl⁻, Br⁻, I⁻, CN⁻, NCO⁻, NCS⁻, NCSe⁻, NH₃, NR₇R₈R₉, and PR₇R₈R₉, wherein R₇, R₈, and R₉ are selected independently from substituted or unsubsituted alkyl, alkenyl, alkynyl and aryl and wherein two or all three of R₇, R₈, and R₉ may connected with each other so as to provide a cyclic or polycyclic ligand;
wherein n and b equal the appropriate number of ligands present on metal M.
